# EUROPÄISCHE PATENTANMELDUNG

(11) **EP 2 395 344 A2**
(43) Veröffentlichungstag der Anmeldung: **14.12.2011**
(21) Anmeldenummer: 11179345.1
(22) Anmeldetag: 17.04.2009
(51) Int. Cl.: G01N 21/27, G01N 21/64, B01L 3/00, G01J 1/58, G01T 1/36, G07D 7/12, G01K 11/14, G01K 11/32, G01N 23/223

(54) **Fluoreszenzstandards und deren Verwendung**

(30) Priorität: 17.04.2008 EP 08007513
(62) Teilanmeldung aus: 09731735.8
(71) Anmelder: Qiagen Lake Constance GmbH, 78333 Stockach (DE)
(72) Erfinder: Die Erfindernennung liegt noch nicht vor
(74) Vertreter: Roth, Carla

(57) **Zusammenfassung**

Die Erfindung betrifft Fluoreszenzstandards und insbesondere Fluoreszenzstandards zur Kalibrierung optischer Detektoren. Erfindungsgemäß wird ein fluoreszierendes Mineral oder Mischungen von Mineralien zur Verwendung als Fluoreszenzstandard eingesetzt. Bei dem fluoreszierenden Mineral kann es sich um ein natürlich vorkommendes Mineral oder um ein synthetisch hergestelltes Mineral handeln. Bevorzugte fluoreszierende Minerale zur Verwendung als Fluoreszenzstandards sind Korund, Fluorit, Türkis, Bernstein, Zirkon, Zoisit, lolith bzw. Cordierit, Spinell, Topas, Calciumf luorit, Sphalerit bzw. Zinkblende, Calcit bzw. Kalkspat, Apatit, Scheelit bzw. Tungstein, Willemit, Feldspate, Sodalith, ein Uran-Mineral, ein Al 3+ enthaltendes Mineral und inbesondere Rubin und Saphir. Eine Probenplatte (10) zur Aufnahme wenigstens einer Probe, umfassend ein fluoreszierendes Mineral (12b, 14b) oder eine Substanz, die ein fluoreszierendes Mineral umfasst ist ebenfalls offenbart.

## Beschreibung

### Gebiet der Erfindung

Die Erfindung betrifft Fluoreszenzstandards bzw. optische Standards und deren Verwendung und insbesondere Fluoreszenzstandards zur Kalibrierung von optischen Detektoren und Fluoreszenzspektroskopie-Instrumenten, wie Mikroskopen, Abbildungsvorrichtungen, Platten-Ablesegeräten, Lateral-Flow-Detektoren und dergleichen.

### Hintergrund der Erfindung

Fluoreszenz bezeichnet die kurzzeitige, spontane Emission von Licht einer Wellenlänge nach Anregung durch Licht oder allgemeiner elektromagnetische Strahlung einer anderen Wellenlänge beim Übergang eines angeregten Elektronenzustands in einen Zustand niedriger Energie. Es gibt zahlreiche natürliche und synthetische Stoffe bzw. Verbindungen, bei denen das Phänomen der Fluoreszenz auftritt und die daher als Fluorophore bezeichnet werden.

Bei der Fluoreszenzspektroskopie besteht ein Bedarf nach Fluoreszenzstandards, um Referenzpunkte für die vorzunehmenden Messungen zu haben. Herkömmliche Fluoreszenzstandards oder Fluoreszenzfarbstoffe bestehen in der Regel aus organischen Verbindungen. Diese Fluoreszenzfarbstoffe basieren darauf, dass die Moleküle des Fluoreszenzfarbstoffes einen Teil der absorbierten Energie als Fluoreszenzlicht bei einer bekannten, anderen Wellenlänge emittieren, wenn sie mit sichtbarem oder ultraviolettem Licht bestrahlt werden. Diese Farbstoffmoleküle, werden beispielsweise in einer Vielzahl unterschiedlicher biologischer Assays verwendet, wobei die Fluoreszenzsignale, die von diesen emittiert werden, Informationen über das untersuchte System liefern können.

Die bekannten Fluoreszenzstandards bzw. Fluoreszenzfarbstoffe weisen jedoch einen oder mehrere der folgenden Nachteile auf: sie sind über den anwendbaren Zeitraum nicht lichtstabil, bleichen leicht aus (vor allem bei einer längeren Belichtung und beim Belichten mit hohen Intensitäten), sind nur innerhalb eines schmalen Spektralbereichs verwendbar, sind teuer, mechanisch, thermisch und chemisch instabil und können altern oder austrocknen, was zu einer Änderung der Fluoreszenzintensität führt.

Aufgabe der vorliegenden Erfindung ist es, einen Fluoreszenzstandard bereitzustellen, der die vorstehenden Nachteile nicht aufweist.

### Zusammenfassung der Erfindung

Gemäß einem ersten Aspekt der Erfindung wird die vorstehende Aufgabe dadurch gelöst, dass ein fluoreszierendes Mineral oder eine Substanz, die ein fluoreszierendes Mineral enthält, als Fluoreszenzstandard verwendet wird. Dabei kann es sich um ein natürliches oder ein synthetisches Mineral handeln.

Vorteilhafterweise handelt es sich bei dem fluoreszierenden Mineral um Korund, insbesondere Rubin oder Saphir, Fluorit, Chlorophan, Türkis, Zirkon, Zoisit, Iolith bzw. Cordierit, Spinell, Topas, Calciumfluorit, Sphalerit bzw. Zinkblende, Wurtzit, Calcit bzw. Kalkspat, Apatit, Scheelit bzw. Tungstein, Powellit, Willemit, Feldspat, Sodalith, ein Uran-Mineral, Apatit bzw. Fluorapatit bzw. Chlorapatit bzw. Hydroxylapatit, Halit, Tanzanit, Aquamarin, Turmalin, Tremolit, Genthelvit, Gonnardit, Helvit, Meionit, Leucophanit, Tugtupit, Villiaumit, Barylit, Beryllit, Albit, Analcim, Wohlerit, Bustamit, Celestin, Chondrodit, Chrysolit bzw. Clinochrysolit, Chrysoberryll, Hemimorphit, Hexahydril, Strontianit, Ammolith, Andesin, Ankerit, Aragonit, Birmit, Chalcedon, Cerussit, Charoit, Diamant, Diopsid, Diaspor, Ekanit, Eudialyt, Friedelit, Greenockit, Grossular, Kunzit, Lapislazuli, Lepidolith, Minium, Norbergit, Oligoklas, Opal, Painit, Phosgenit, Phosphophyllit, Rhodizit, Rhodochrosit, Magmesit, Schwefel, Shortit, Siderit, Spurrit, Spodumen, Stolzit, Vanadinit, Wolframit, Wulfenit, YAG, Zinkit, Zinnober, Zunyit, Smithsonit, Anglesit, Microcline, Orthoclas, Danburit, Laurionit, Paralaureonit, Vlasovit, Thorit, Benitoit, Phenakit, Eukryptit, Dolomit, Svabit, Pectolit, Tirodit, Manganaxinit, Esperit, Roeblingit, Harstigit, Otavit, Johnbaumit, Kyanit, Uvarovit, Sanidin, Scapolit, Moissanit (SiC), Cubic Zirkonia, Bernstein, Koralle, Perle, Perlmutt, Elfenbein oder um ein Al³⁺ enthaltendes Mineral bzw. oxidische und hydroxidische Minerale.

Optional kann das fluoreszierende Mineral mit einem Aktivator oder Kombinationen von Aktivatoren dotiert sein, wobei geeignete Aktivatoren sind: zweiwertiges Mangan, Blei, Antimon, Cerium, insbesondere dreiwertiges Cerium, dreiwertiges Chrom, zweiwertiges oder dreiwertiges Eisen, dreiwertiges oder vierwertiges Titan, Kupfer, Silber, zweiwertiges Samarium, zweiwertiges oder dreiwertiges Europium, dreiwertiges Terbium, dreiwertiges Dysprosium, dreiwertiges Holmium, dreiwertiges Erbium, Uranyl-Verbindungen, Ruthenium-Verbindungen, Zinn-Verbindungen, Thallium-Verbindungen, Bismut-Verbindungen, Wolframat-Verbindungen, Molybdat-Verbindungen, Schwefel, Vanadium-Verbindungen, Lanthan-Verbindungen, Praeseodym-Verbindungen, Neodym-Verbindungen, Promethium-Verbindungen, Gadolinium-Verbindungen, Thulium-Verbindungen, Ytterbium-Verbindungen, Lutetium-Verbindungen.

Die Aktivatoren können in Dotierungen von 0.001% bis 20% (Gewichtsprozent) im Mineral vorhanden sein.

Das fluoreszierende Mineral kann in einer Vielzahl von Formen als Fluoreszenzstandard verwendet werden, beispielsweise in Form von Zylindern, Prismen, Platten, Küvetten, Röhren, Kapillaren, Quadern, Blättchen, Kügelchen bzw. Beads, Nanopartikeln oder als Pulver. Im Fall von Beads, Nanopartikeln oder eines Pulvers kann das fluoreszierende Mineral in ein Polymer oder eine Trägermatrix, z.B. aus Glas, Kunststoff oder Hydrogel, eingegossen bzw. einpolymerisiert sein. Die Verwendung eines fluoreszierenden Minerals als Fluoreszenzstandard in Form einer Vielzahl kleiner Partikel, beispielsweise Beads, verbessert die Homogenität des Standards, da bei der Messung ein statistischer Mittelwert ermittelt werden kann.

Optional kann das fluoreszierende Mineral für eine gewünschte Anwendung als Fluoreszenzstand funktionalisiert sein, indem funktionelle Gruppen mit der gewünschten Funktion chemisch auf der Oberfläche des fluoreszierenden Minerals angebracht werden. Insbesondere oxidische und hydroxidische Minerale sind leicht chemisch zu modifizieren. Funktionalisierte Minerale können dann als Marker an andere Moleküle zum Nachweis als Fluoreszenzstandard angebunden werden. Eine weitere Art der Anbindung kann durch Einkapselung in z.B. Beads, Nanomaterialien, Polymere, Gele, Hydrogele, Gläser und Kügelchen erfolgen, die ihrerseits funktionalisiert sind oder funktionalisiert werden können.

Vorteilhafterweise wird das fluoreszierende Mineral als Fluoreszenzstandard verwendet, um ein optisches Messgerät zu kalibrieren.

Vorteilhafterweise wird das fluoreszierende Mineral als Fluoreszenzstandard verwendet, um ein Produkt oder ein Objekt zu identifizieren.

Vorteilhafterweise wird das das fluoreszierende Mineral als Fluoreszenzstandard verwendet, um die auf das fluoreszierende Mineral einstrahlende Lichtmenge zu bestimmen.

Vorteilhafterweise wird das fluoreszierende Mineral als Fluoreszenzstandard verwendet, um die Temperatur zu bestimmen und ggf. zu regeln.

Gemäß einem weiteren Aspekt der Erfindung wird eine Probenplatte zur Aufnahme wenigstens einer Probe bereitgestellt, die ein fluoreszierendes Mineral (natürlich oder synthetisch) oder eine Substanz, die ein fluoreszierendes Mineral umfasst, als Fluoreszenzstandard umfasst.

Diese Probenplatte kann beispielsweise als Mikrotiterplatte mit einer Vielzahl von Vertiefungen (z.B. 96 Vertiefungen) oder vorzugsweise als Lochplatte ausgestaltet sein, wobei sich mehrere Löcher vollständig durch die Lochplatte erstrecken und die Größe dieser Löcher so bemessen ist, dass eine in diese Löcher eingebrachte Probe aufgrund der Kapillarkräfte gegen die Schwerkraft in den Löchern gehalten wird.

Erfindungsgemäß können die ganze Probenplatte oder nur ein Teil der Probenplatte aus einem fluoreszierenden Mineral oder einer Substanz, die ein fluoreszierendes Mineral umfasst, als Fluoreszenzstandard bestehen.

Alternativ kann im Fall einer Mikrotiterplatte mit einer Vielzahl von Vertiefungen das fluoreszierende Mineral oder die Substanz, die ein fluoreszierendes Mineral umfasst, als Fluoreszenzstandard in wenigstens einer der Vertiefungen angeordnet sein, und zwar herausnehmbar oder fest mit der Probenplatte verbunden. Im Fall der Lochplatte mit einer Vielzahl von Löchern kann das fluoreszierende Mineral als Fluoreszenzstandard in wenigstens einem der Löcher angeordnet sein. Hierbei können die Mikrotiterplatte bzw. die Lochplatte selbst aus bekannten Materialien, wie beispielsweise Kunststoff oder Glas, bestehen. Vorzugsweise weist das fluoreszierende Mineral als Fluoreszenzstandard eine Form auf (vorzugsweise zylindrisch), die der Form der Vertiefungen der Mikrotiterplatte und/oder der Form der Löcher der Lochplatte entspricht.

Weitere vorteilhafte Ausgestaltungen der erfindungsgemäßen Aspekte sind in den Unteransprüchen definiert.

### Kurze Beschreibung der Zeichnungen

Figur 1a zeigt eine bevorzugte Zylinderform des erfindungsgemäßen fluoreszierenden Minerals als Fluoreszenzstandard.
Figur 1b zeigt schematisch eine Draufsicht auf eine Probenplatte, die mit dem erfindungsgemäßen fluoreszierenden Mineral als Fluoreszenzstandard von Figur 1a versehen ist.
Figur 1c zeigt eine Querschnittsansicht von Figur 1b entlang der Linie A-A.
Figur 2 zeigt schematisch ein optisches Ablesegerät, das für die Verwendung mit den erfindungsgemäßen Fluoreszenzstandards besonders geeignet ist.
Die Figuren 3a bis 3n zeigen in Form von Balkendiagrammen gemessene Fluoreszenzintensitäten für erfindungsgemäße Fluoreszenzstands und zum Vergleich einige herkömmliche Fluoreszenzstandards bei unterschiedlichen Anregungs- und Emissionswellenlängen.
Die Figuren 4a bis 4f zeigen in Form von Balkendiagrammen gemessene Fluoreszenzintensitäten für erfindungsgemäße Fluoreszenzstands und zum Vergleich einige herkömmliche Fluoreszenzstandards bei unterschiedlichen Anregungs- und Emissionswellenlängen in einer Zusammenschau.
Figur 5 zeigt die gemessene Fluoreszenzintensität eines erfindungsgemäßen Fluoreszenzstandards in Form eines Rubins als Funktion der Bestrahlungsdauer mit Licht bei einer Anregungswellenlänge von 532 nm.
Figur 6 zeigt die Temperaturabhängigkeit des Emissionsspektrums eines erfindungsgemäßen Fluoreszenzstandards in Form von Rubin.
Figur 7 zeigt die Fluoreszenzintensität eines auf ca. 200 bzw. 250 Grad Celsius erwärmten erfindungsgemäßen Fluoreszenzstandards in Form von Rubin als Funktion der Zeit.

### Detaillierte Beschreibung der Erfindung

Aufgrund umfangreicher Versuche und Untersuchungen hat sich überraschenderweise herausgestellt, dass fluoreszierende Minerale bzw. fluoreszierende Minerale enthaltende Stoffe bzw. Substanzen zur vorteilhaften Verwendung als Fluoreszenzstandards geeignet sind, die gegenüber bekannten Fluoreszenzstandards zahlreiche Vorteile aufweisen, wie sich dies unter anderem aus der nachstehenden detaillierten Beschreibung der Erfindung ergibt.

Wie dies dem Fachmann bekannt ist, weisen einige natürlich vorkommende Minerale geringe Mengen eines Aktivators oder mehrerer Aktivatoren auf, wobei der Aktivator in Form Atomen, Molekülen oder Ionen vorliegt, die in der Kristallstruktur des Minerals eingebaut sind und zu Fluoreszenzerscheinungen führen, wenn das Mineral durch Strahlung angeregt wird. Es gibt allerdings auch amorphe fluoreszierende Mineralien. Einige Minerale können dabei Fluoreszenz über einen weiten Wellenlängenbereich bezüglich des angeregten und emittierten Lichtes zeigen. Ein idealer Fluoreszenzstandard ist ein Standard, der eine im Wesentlichen konstante Fluoreszenzintensität über den gesamten spektralen Bereich des Lichtes zeigt, der im Bereich des Interesses der Anwendung liegt, kostengünstig ist, nicht ausbleicht und einfach zu verarbeiten und in verschiedenen Formen zu gestalten ist, möglichst temperaturstabil ist, chemisch inert ist und nicht altert. Hierbei bedeutet chemisch inert, dass der Fluoreszenzstandard seine Fluoreszenzeigenschaften nicht ändert, wenn er chemischen Stoffen ausgesetzt ist. Wie weiter unten beschrieben, kann der erfindungsgemäße Fluoreszenzstandard jedoch auch chemisch funktionalisiert sein.

Überraschenderweise haben umfangreiche Versuche ergeben, dass Rubin (natürlich vorkommend oder synthetisch) ein Fluoreszenzstandard ist, der relativ nahe an das Ideal herankommt. Aber auch andere Materialien wie beispielsweise Saphir, Fluorit, Türkis, Bernstein, Zirkon, Zoisit, Iolith bzw. Cordierit, Spinell, Topas, Calciumfluorit, Sphalerit bzw. Zinkblende, Calcit bzw. Kalkspat, Apatit, Scheelit bzw. Tungstein, Willemit, Feldspate, Sodalith, ein Uran-Mineral oder ein Al³⁺ enthaltendes Mineral können verwendet werden. Weitere erfindungsgemäß als Fluoreszenzstandard verwendbare fluoreszierende Mineralien werden in den Büchern "Fluorescence: Gems and Minerals under Ultraviolett Light", Manuel Robbins, GeoSciences Press, Inc., Phoenix, Arizona, 1994 und "The World of Fluorescence Minerals", Stuart Schneider, Schiffer Publishing Ltd., Atglen, PA, 2006 beschrieben, auf die hiermit ausdrücklich vollumfänglich Bezug genommen wird.

Der Fachmann wird erkennen, dass es, um die Eigenschaften der erfindungsgemäßen Fluoreszenzstandards weiter zu verbessern, vor allem im Hinblick auf eine geringere Wellenlängenabhängigkeit der Fluoreszenzintensität über einen großen Wellenlängenbereich vorteilhaft sein kann, ein Gemisch von verschiedenen fluoreszierenden Mineralen bereitzustellen, die derart zusammenwirken, dass das Gemisch die für eine Anwendung gewünschte Wellenlängenabhängigkeit der Fluoreszenzintensität aufweist.

Die vorstehenden Minerale können beispielsweise mit einem der folgenden Aktivatoren oder Kombinationen davon dotiert sein: zweiwertiges Mangan, Blei, Antimon, Cerium, insbesondere dreiwertiges Cerium, dreiwertiges Chrom, zweiwertiges oder dreiwertiges Eisen, dreiwertiges oder vierwertiges Titan, Kupfer, Silber, zweiwertiges Samarium, zweiwertiges oder dreiwertiges Europium, dreiwertiges Terbium, dreiwertiges Dysprosium, dreiwertiges Holmium, dreiwertiges Erbium, Uranyl-Verbindungen, Ruthenium-Verbindungen, Wolframat-Verbindungen, Molybdat-Verbindungen, Schwefel, und andere seltene Erden. Dabei können die Aktivatoren in Dotierungen von 0.001% bis 20% (Gewichtsprozent) im Mineral vorhanden sein.

Ein Vorteil der Erfindung besteht darin, dass die vorstehend erwähnten Minerale ggf. in Verbindung mit wenigstens einem Aktivator nicht nur bei einer Anregung mit UV-Licht fluoreszieren, sondern über einen weiten Wellenlängenbereich angeregt werden können, nämlich teilweise bei Wellenlängen von mehr als 600 nm.

Neben den natürlich vorkommend fluoreszierenden Mineralen sind auch synthetisch hergestellte fluoreszierende Minerale (oftmals auch synthetische Edelsteine genannt) für die erfindungsgemäße Verwendung als Fluoreszenzstandard geeignet. Beispielsweise können die folgenden Minerale bzw. Edelsteine synthetisch hergestellt werden und sind kommerziell erhältlich: Diamant, Siliciumcarbid (Moissanite), Rubin, Saphir, Zirkon, Beryll, Smaragd/Emerald, Opal, Quartz, Jade, Topas, Türkis, Lapis Lazuli, Chrysoberyll, Bernstein, Spinell, Tourmalin, Tanzanite, Zinkblende, Wurtzit und andere. Für eine detailliertere Beschreibung von synthetischen Mineralen bzw. Edelsteinen wird der Fachmann auf das folgende Buch verwiesen, auf das hiermit ausdrücklich vollumfänglich Bezug genommen wird: "Artifical Gemstones", Michael O'Donoughue, NAG Press, London, 2005.

Da es sich bei den vorstehend beschriebenen erfindungsgemäßen fluoreszierenden Mineralen zur Verwendung als Fluoreszenzstandard in der Regel um Feststoffe handelt können diese je nach der gewünschten Anwendung als Fluoreszenzstandard in einer Vielzahl von Formen bereitgestellt werden, beispielsweise als Blättchen, Zylinder, Prismen oder andere geometrische Formen, poliert oder rau, geschnitten, gebrochen, zerhackt und vorzugsweise als Pulver oder eingegossenes oder ein-polymerisiertes Pulver, die in allen Größen verarbeitet bzw. aufbereitet/hergestellt werden können. Vorteil der Pulverisierung ist, dass kein Ausschuss entsteht, dass teure Kosten für Schneiden und Polieren entfallen, dass Inhomogenitäten in den Fluoreszenzstandards ausgemittelt werden, dass Pulver verschiedener Materialien zusammengemischt werden können und dass Pulver weiter in andere Materialien eingebettet werden können (z.B. Polymer, Harz, Gele, etc.).

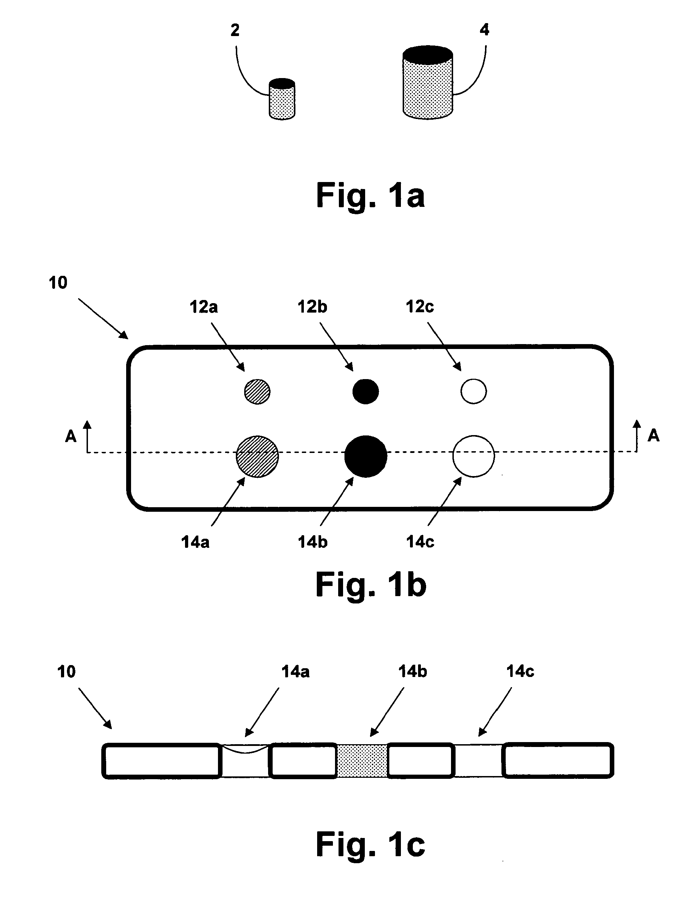

Vorzugsweise weist das erfindungsgemäße fluoreszierende Mineral zur Verwendung als Fluoreszenzstandard eine Zylinderform auf, wie diese in Figur 1a schematisch dargestellt ist. Zu diesem Zweck kann beispielsweise pulverisierter Rubin (bzw. Rubin-Nanopartikel) in ein Polymer (z.B. COC [Cyclic Olefin Copolymer], COP [Cyclic Olefin Polymer], Acryl und andere) oder Hydrogel eingebettet werden und als Zylinder mit unterschiedlichen Durchmessern und Längen gegossen, also auspolymerisiert werden. Bei Bedarf kann ein derartiger Zylinder in entsprechend kleinere Zylinder geschnitten werden. Dies stellt ein einfaches und kostengünstiges Produktionsverfahren für unterschiedliche Zylindergrößen dar. Wie erwähnt, weist in der Figur 1a das erfindungsgemäße fluoreszierende Mineral zur Verwendung als Fluoreszenzstandard jeweils eine Zylinderform auf, wobei die Länge und der Durchmesser des Zylinders 2 kleiner als die Länge und der Durchmesser des Zylinders 4 sind.

Die Zylinderform für ein erfindungsgemäßes fluoreszierendes Mineral zur Verwendung als Fluoreszenzstandard wird auch deshalb bevorzugt, da das erfindungsgemäße fluoreszierende Mineral zur Verwendung als Fluoreszenzstandard in dieser Form sehr einfach in eine entsprechend geformte Bohrung eines entsprechenden Geräts eingesetzt werden kann, um beispielsweise zur Kalibrierung des Geräts zu dienen.

Die vorstehend beschriebenen erfindungsgemäßen fluoreszierenden Minerale zur Verwendung als Fluoreszenzstandards können vorteilhaft in eine Probenplatte bzw. einen Probenträger zur Aufnahme einer Vielzahl von Proben integriert werden. Diese Probenplatte kann beispielsweise als ein Mikroskopträger ("Slide") oder als eine Mikrotiterplatte mit einer Vielzahl von Vertiefungen (z.B. 96 Vertiefungen bzw. "Wells") ausgestaltet sein. Dabei kann entweder der ganze Mikroskopträger bzw. die ganze Mikrotiterplatte oder nur ein bestimmter Teil davon aus einem erfindungsgemäßen fluoreszierenden Mineral zur Verwendung als Fluoreszenzstandard bestehen. Alternativ kann ein erfindungsgemäßer Probenträger dazu ausgestaltet sein, eine Vielzahl von Kapillaren, Küvetten, Reaktionsgefäßen, Gels, Polymeren, Tubes, und/oder Microfluidic-Chips aufzunehmen.

Im Fall einer Mikrotiterplatte kann das erfindungsgemäße fluoreszierende Mineral zur Verwendung als Fluoreszenzstandard in wenigstens einer der Vertiefungen angeordnet sein. Wenn beispielsweise das erfindungsgemäße fluoreszierende Mineral zur Verwendung als Fluoreszenzstandard in der vorstehend beschriebenen Zylinderform vorliegt und die Vertiefungen der Mikrotierplatte eine entsprechend komplementäre Zylinderform aufweisen, kann das erfindungsgemäße fluoreszierende Mineral zur Verwendung als Fluoreszenzstandard leicht in eine oder mehrere dieser Vertiefungen eingebracht werden, und zwar wieder herausnehmbar oder fest mit der Probenplatte verbunden, beispielsweise durch ein Verkleben.

In den Figuren- 1b und 1c ist eine weitere bevorzugte Ausführungsform einer Probenplatte zur Aufnahme einer Vielzahl von Proben dargestellt, in welche die vorstehend beschriebenen erfindungsgemäßen fluoreszierenden Minerale zur Verwendung als Fluoreszenzstandards vorteilhaft integriert werden können. Bei der in den Figuren 1b und 1c dargestellten Probenplatte handelt es sich um eine Lochplatte 10 mit mehreren Löchern 12a, 12b, 12c, 14a, 14b, 14c, die sich vollständig durch die Lochplatte 10 erstrecken und hinsichtlich ihrer Größe so bemessen sind, dass eine in diese Löcher 12a, 12b, 12c, 14a, 14b, 14c eingebrachte Probe aufgrund der Kapillarkräfte gegen die Schwerkraft in den Löchern 12a, 12b, 12c, 14a, 14b, 14c gehalten wird. Die in den Figuren 1b und 1c dargestellte Lochplatte 10 weist beispielhaft 6 Löcher 12a, 12b, 12c, 14a, 14b, 14c auf, wobei jeweils drei Löcher denselben Durchmesser aufweisen und der Durchmesser der Löcher 12a, 12b, 12c kleiner als der Durchmesser der Löcher 14a, 14b, 14c ist. Der Fachmann wird jedoch erkennen, dass die vorliegende Erfindung nicht auf die in den Figuren 1a und 1b dargestellte Anzahl, Form und Anordnung der Löcher beschränkt ist.

Ebenso wie im Fall des Mikroskopträgers und der Mikrotierplatte, wie diese vorstehend beschrieben worden sind, kann sowohl die gesamte Lochplatte 10 als auch nur ein Teil davon erfindungsgemäß aus einem fluoreszierenden Mineral zur Verwendung als Fluoreszenzstandard bestehen.

Vorzugsweise ist jedoch in wenigstens eines der Löcher der Lochplatte 10 ein fluoreszierendes Mineral zur Verwendung als Fluoreszenzstandard in Form eines Zylinders, wie beispielsweise die Zylinder 2 und 4 aus Figur 1, eingesteckt. So ist beispielsweise in der in Figur 1b dargestellten Lochplatte 10 jeweils ein fluoreszierendes Mineral zur Verwendung als Fluoreszenzstandard in den Löchern 12b und 14b angeordnet. In den Löchern 12a und 14a befindet sich eine flüssige Probe und die Löcher 12c und 14c sind leer. Wie im Fall der vorstehend beschriebenen Mikrotiterplatte kann ein Zylinder aus fluoreszierendem Mineral zur Verwendung als Fluoreszenzstandard wieder herausnehmbar in die Lochplatte 10 eingesteckt werden oder fest mit der Lochplatte 10 verbunden werden, beispielsweise durch ein Verkleben. Weitere bevorzugte Ausführungsformen von Lochplatten, die für die erfindungsgemäße Verwendung geeignet sind, werden detaillierter in der PCT/EP2009/002333 beschrieben, auf die hiermit ausdrücklich vollumfänglich Bezug genommen wird.

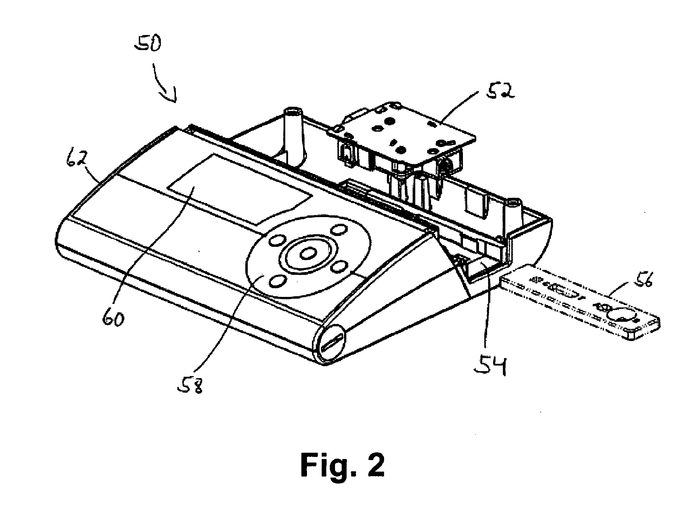

Als besonders geeignet für die Verwendung mit den vorstehend beschriebenen Fluoreszenzstandards und Probenplatten hat sich die in Figur 2 dargestellte optische Messvorrichtung 50 erwiesen, die von der Firma ESE GmbH, Deutschland vertrieben wird und detaillierter in der internationalen Patentanmeldung PCT/EP2008/001468 beschrieben wird, auf die hiermit ebenfalls ausdrücklich vollumfänglich Bezug genommen wird. Die Messvorrichtung 50 umfasst ein monolithisches elektrooptisches Modul 52, das die optischen und elektronischen Komponenten zum Durchführen einer Messung enthält. Dieses Modul, das ebenfalls in der vorstehend zitierten PCT/EP2008/001468 ausführlicher beschrieben wird, weist eine konfokale Ausgestaltung der Optik auf.

Ferner umfasst die Messvorrichtung 50 einen Einschub 54 für die Aufnahme einer Probenplatte 56, bei der es sich um eine der vorstehend beschriebenen Probenplatten handeln kann, nämlich einen Mikroskopträger, eine Mikrotiterplatte oder eine Lochplatte, in die erfindungsgemäß ein fluoreszierendes Mineral zur Verwendung als Fluoreszenzstandard integriert ist. Die Probenplatte 56 kann in den Einschub 54 eingebracht werden und relativ zu dem Modul 52 bewegt werden. Zusätzlich oder alternativ kann das Modul 52 relativ zur Probenplatte 56 bewegt werden. Die Messvorrichtung 50 ist ferner mit einem Tasten- bzw. Bedienfeld 58 zum Steuern der Messungen sowie einem Display 60 zur Anzeige der erhaltenen Messergebnisse ausgestattet.

Die vorstehend beschriebenen erfindungsgemäßen Fluoreszenzstandards und Probenplatten aus derartigen Fluoreszenzstandards sind für die Kalibrierung von Instrumenten geeignet, die zum Messen der Steady-State-Fluoreszenz, zeitaufgelösten Fluoreszenz, Fluoreszenzlebensdauer und/oder Fluoreszenzpolarisation verwendet werden. In diesem Kontext bezieht sich der Begriff Kalibieren bzw. Kalibrierung auf die Wellenlänge des Fluoreszenzsignals, die Intensität des Fluoreszenzsignals, die Lebensdauer oder Länge des Fluoreszenzsignals und/oder die Ausrichtung einer Probenplatte. Die Ausrichtung kann durch eine Bewegung der Platte relativ zu einem optischen Ablesegerät kontrolliert bzw. reguliert werden, und zwar in eine Position, bei der z.B. die maximale Fluoreszenzintensität beobachtet wird.

Die erfindungsgemäßen Fluoreszenzstandards sollen verwendet werden, um die Genauigkeit und die operative Funktionstüchtigkeit beispielsweise von Fluoreszenzsensoren zu überwachen. Die Fluoreszenzstandards können z.B. analytische Geräte (z.B. das vorstehend beschriebene optische Messgerät 50) eingebaut werden, um die Funktionstüchtigkeit dieser Geräte zu gewährleisten. Die Geräte führen z.B. einen Selbsttest durch, der die Sensorfunktionen mit einschließt. Dabei illuminiert der Sensor den Fluoreszenzstandard und misst die Fluoreszenzintensität des Standards. Dieser Wert wird dann mit einem gespeicherten Wert verglichen. Liegen beide Werte innerhalb des erlaubten Toleranzbereichs, so wird der Selbsttest als bestanden ausgegeben. Dabei wird sowohl die Lichtquelle, als auch der Detektor, als auch die Elektronik als auch die mechanischen Teile (sofern der Sensor zunächst bewegt werden muss) des Gerätes überprüft.

Die Anwendung der erfindungsgemäßen fluoreszierenden Minerale ist nicht nur auf Intensitätsmessungen begrenzt. Fluoreszenz kann als Intensitätsmessung durchgeführt werden, aber auch zeitaufgelöst als Lebensdauerbestimmung des angeregten Zustands, als Polarisationsmessung, als Phasenverschiebungsmessung bei einer mit einer modulierten Intensität angeregten Fluoreszenz und als Messung der Rotationskorrelationszeit, da während der Zeitverzögerung von Anregung zu Emission, sich die fluoreszierenden Moleküle bewegen können und, falls polarisiert emittierend, Licht in einen bestimmten Raumwinkel abstrahlen. Daher können die erfindungsgemäßen fluoreszierenden Minerale oder Mischungen davon als Standards für alle diese Arten von Fluoreszenzmessungen eingesetzt werden.

Die Anwendung der erfindungsgemäßen fluoreszierenden Minerale ist nicht nur auf die Verwendung als Fluoreszenzstandards begrenzt, sondern die Minerale können auch als Farbstandards, bzw. reflektrometrische Standards, generell als optische Standards eingesetzt werden.

Ebenso können die erfindungsgemäßen Fluoreszenzstandards funktionalisiert werden, z.B. durch das chemische Anbringen von funktionellen Gruppen auf der Oberfläche. Dem Fachmann ist bekannt, dass Oxide, wie Korund/Rubin/Saphir oder Silicate, sich durch Siliziumchemie (Silane, Siloxane) relative leicht und mit allen möglichen funktionellen Gruppen ausstatten lassen. Ferner ist eine Verkapselung der erfindungsgemäßen fluoreszierenden Minerale in Kügelchen bzw. Beads, insbesondere Nanobeads, und deren Verwendung in einem Durchflusszähler denkbar.

Erfindungsgemäß ist es ferner denkbar, dass beliebige Produkte oder Objekte mit den erfindungsgemäßen Fluoreszenzstandards eindeutig identifiziert werden können. Die erfindungsgemäßen fluoreszierenden Minerale zur Verwendung als Fluoreszenzstandards sind nämlich Licht, Temperatur und anderweitig stabil, so dass z.B. auch ohne weiteres Etiketten, Barcodes, Verpackungen etc. damit versehen werden können und auch nach längerer Zeit noch zuverlässig ausgelesen bzw. wiedererkannt werden können. Dabei kann man verschiedene, stabile fluoreszierende Minerale als Fluoreszenzstandard verwenden, und aufgrund der Farb- oder Intensitätskombinationen bei verschiedenen Wellenlängen auf das ursprüngliche Objekt zurück schließen. Das ist wichtig z.B. an der Kasse eines Supermarkts, beim Multiplexen von biochemischen Assays, beim Zoll, um Waren ketten und Originale zu identifizieren, für fälschungssichere Ausweise, Geld und z.B. für die individuelle und zuordenbare Künstlermalerfarbe.

Ferner können die erfindungsgemäßen fluoreszierenden Minerale bzw. Substanzen, die ein solches erfindungsgemäßes Mineral enthalten, unter Ausnutzung der Fluoreszenzeigenschaften als Temperaturdetektor, zum Überwachen von Temperaturen und zur Temperaturkalibrierung von Messungen verwendet werden. Da die Stärke der Fluoreszenz von der Temperatur der erfindungsgemäßen fluoreszierenden Minerale abhängt und diese einen relativ hohen Schmelzpunkt aufweisen (der Schmelzpunkt von Rubin beispielsweise liegt bei ca. 2050 Grad Celsius), kann man durch Fluoreszenzmessung aufgrund der Fluoreszenzintensität evtl. bei verschiedenen Wellenlängen oder auch bei einer einzigen Wellenlänge die Temperatur bestimmen. Besonders interessant hieran ist, dass nur sehr wenige herkömmliche Temperaturmessgeräte einen Bereich von bis zu mehr als 2000 Grad Celsius abdecken, was jedoch beispielsweise für industrielle Sinter-Prozesse sehr wichtig ist.

Ein weiterer Vorteil von z.B. Rubin ist, dass er nicht toxisch ist und schwer löslich ist. Das ermöglicht den Einsatz in der Medizintechnik, beispielsweise in Implantaten, und für viele diagnostische Zwecke, z.B. als Standard zum Überwachen des Glucose-Gehalts in Implantaten.

### Beispiele:

1. Kommerziell erhältliche gefärbte Gläser sind mit den erfindungsgemäßen Mineralen zur Verwendung als Fluoreszenzstandard verglichen worden. Dabei erfolgte die Anregung ("Excitation"; in den Figuren als Ex abgekürzt) bei Werten in einem Bereich von 365 nm bis 660 nm, und die Emission (in den Figuren als Em abgekürzt) wurde bei Werten in einem Bereich von 480 nm bis 720 nm mit der als ESE-FluoSens Sensor ausgestalteten vorstehenden beschriebenen Messvorrichtung 50 gemessen.

Bei den verwendeten Vergleichsgläsern handelt es sich um die kommerziell erhältlichen gefärbten Gläser von der Firma Schott Glas mit den Produktnamen OG 550 (Schmelznummer: 339636, Abmessung 50,0 x 50,0 mm, Dicke 1,0mm), OY 530 (Abmessung 13,0 mm, Durchmesser, Dicke 2,0mm) und OY 570 (Abmessung 13,0 mm, Dicke 2,0mm).

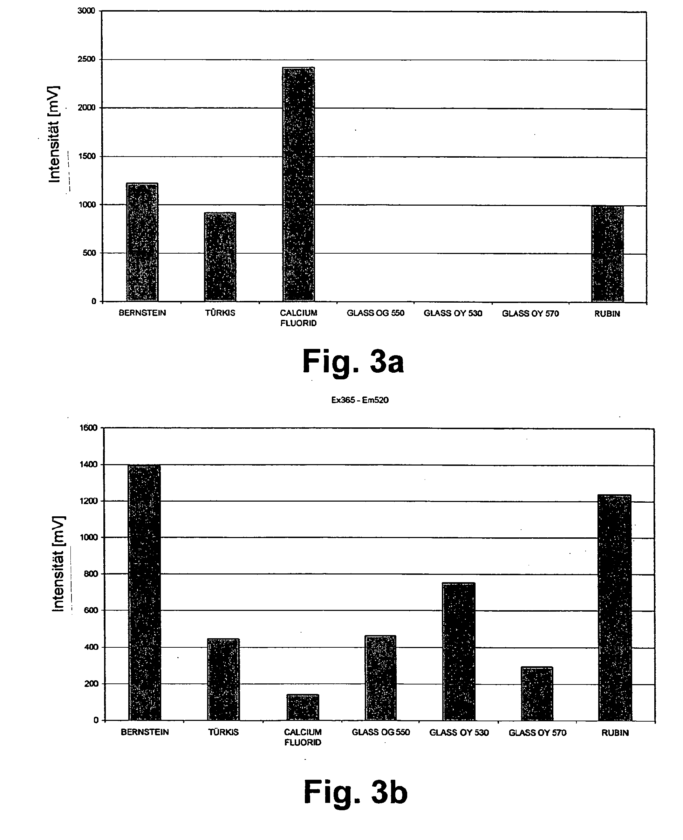

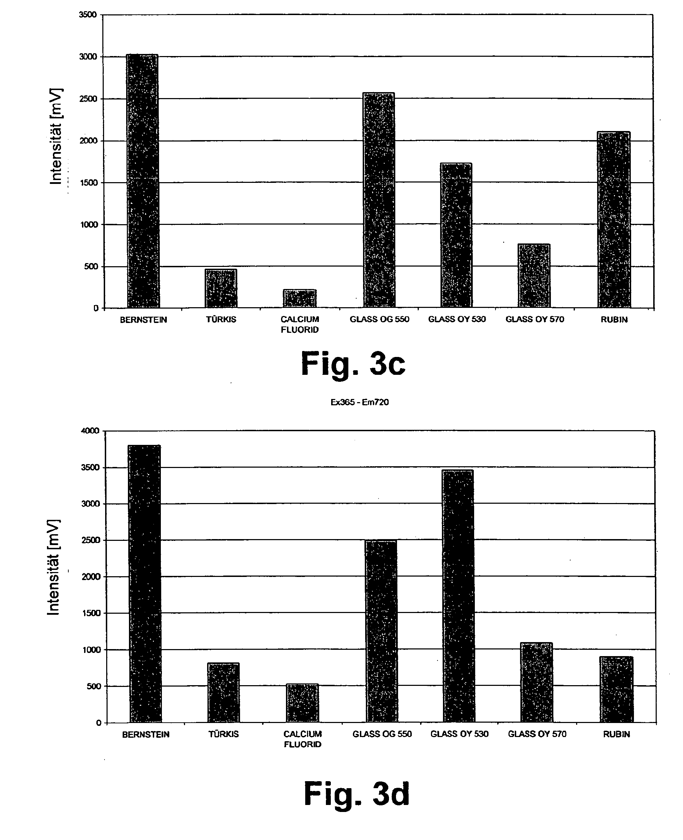

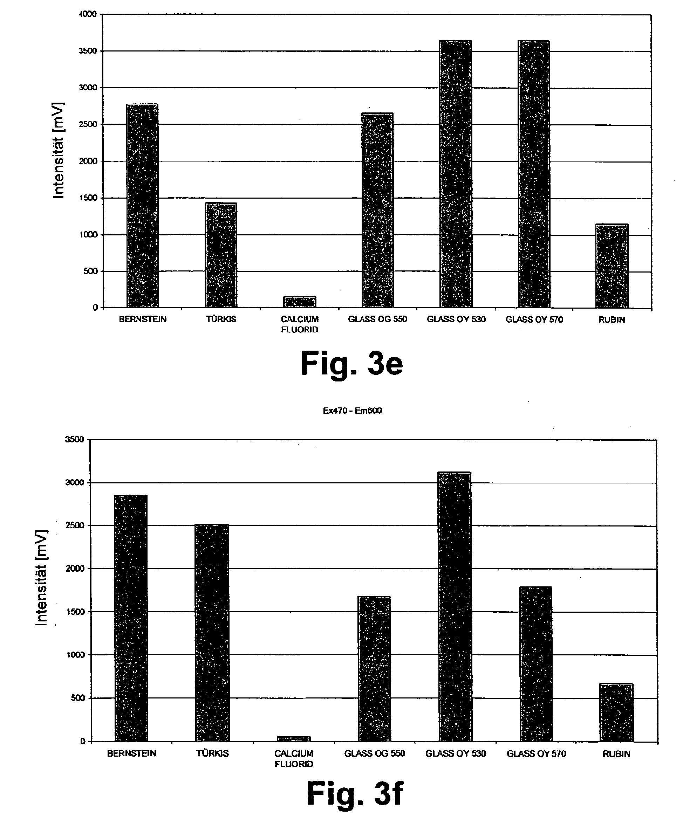

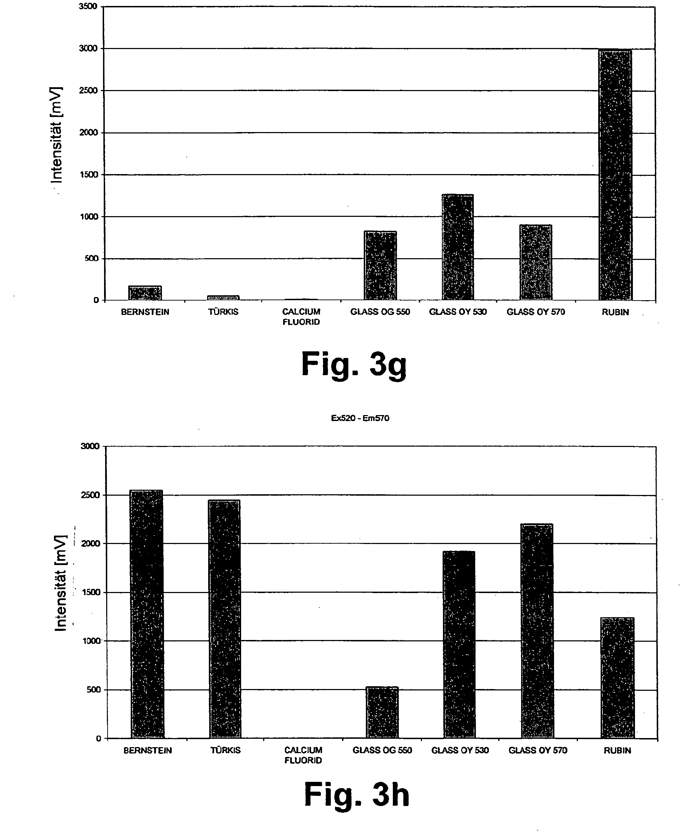

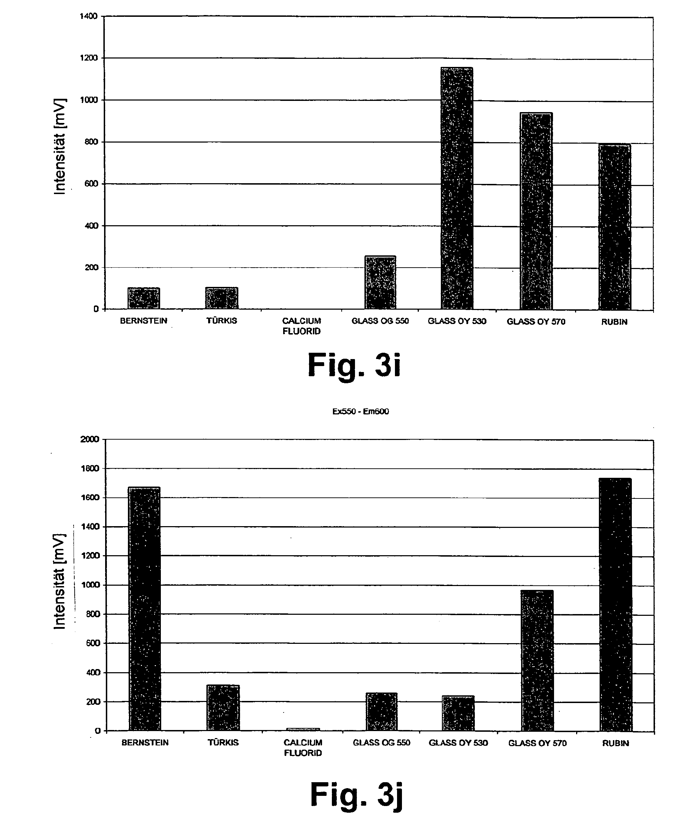

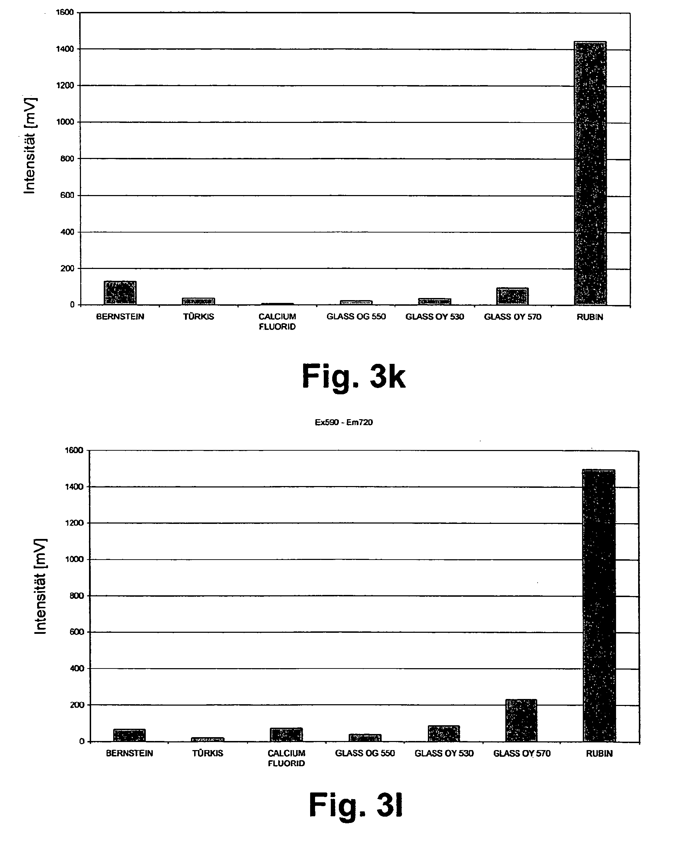

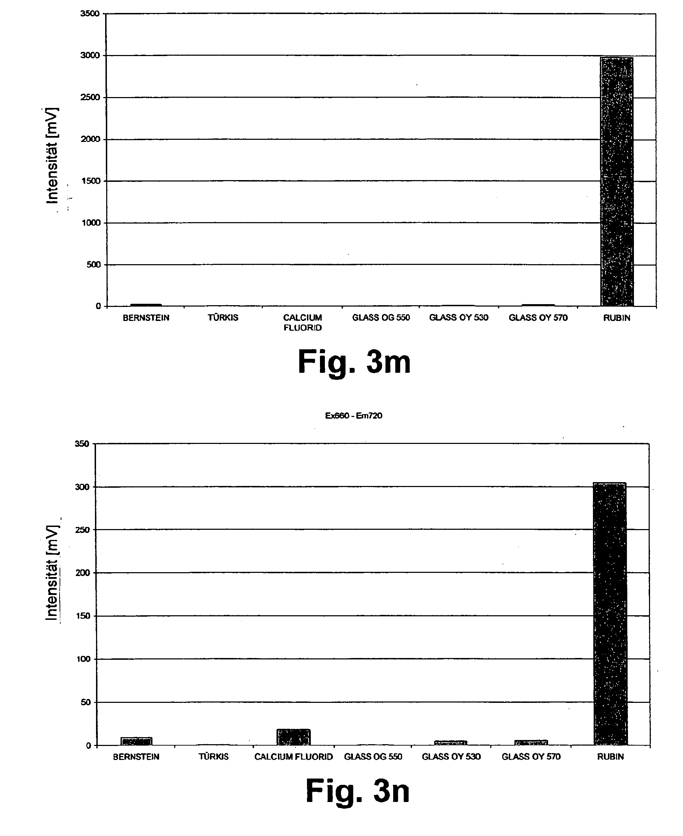

Die Figuren 3a bis 3n zeigen in Form von Balkendiagrammen die gemessenen Fluoreszenzintensitäten in mV für Rubin, Bernstein, Türkis, Calcium-Fluorid, und die drei verschiedenen von der Firma Schott erhältlichen Fluoreszenzstandards, nämlich die Gläser OG 550, OY 530, und OY 570, bei unterschiedlichen Anregungs- und Emissionswellenlängen.

Man sieht sofort die begrenzte Anwendbarkeit der verwendeten kommerziell erhältlichen Gläser als Fluoreszenzstandards, da diese bei vielen Wellenlängenkombinationen (Anregung (Ex)/Detektion (Em)) ein sehr geringes bzw. gar kein Signal zeigen.

Im Gegensatz hierzu zeigt beispielsweise Rubin ein sehr ausgeprägtes Fluoreszenzsignal bei fast allen Wellenlängenkombinationen, vor allem eben auch bei höheren Wellenlängen. In diesem Bereich gibt es praktisch keine organischen Verbindungen zur Verwendung als Fluoreszenzstandard, die "lichtstabil" sind, d.h. bei einer längeren Bestrahlung nicht ausbleichen ("bleechen"). Ein weiterer Vorteil der erfindungsgemäßen fluoreszierenden Minerale, insbesondere Rubin, ist die ausgeprägte Fluoreszenzintensität bei großem "Stokes Shift", d.h. dem Abstand von der Anregungswellenlänge (Ex) zu der Emissionswellenlänge (Em).

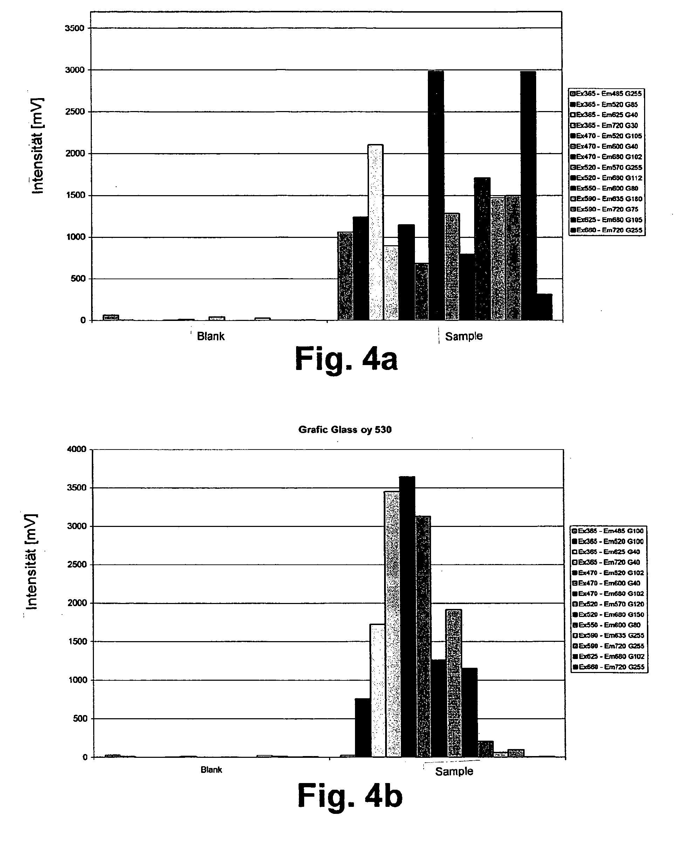

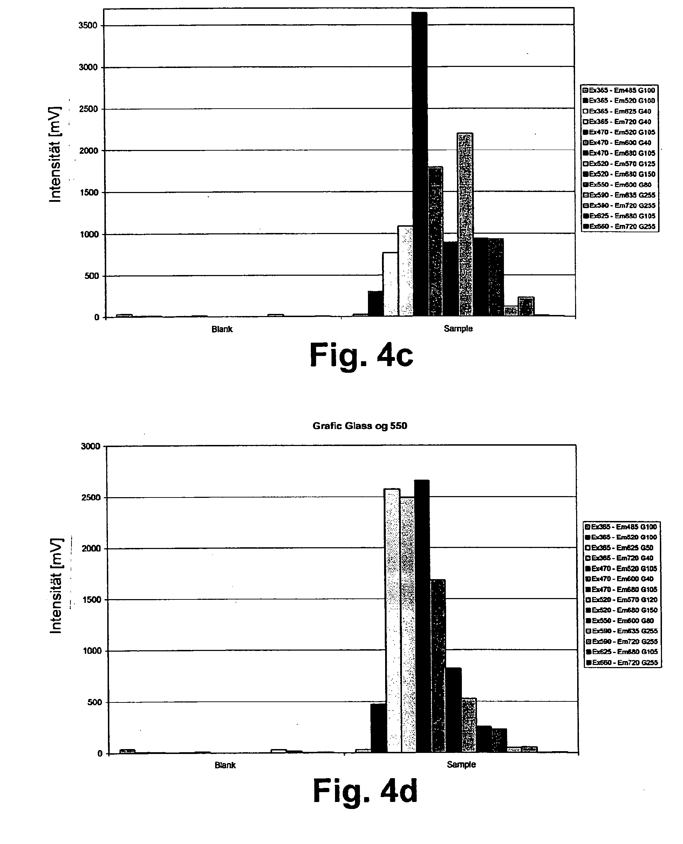

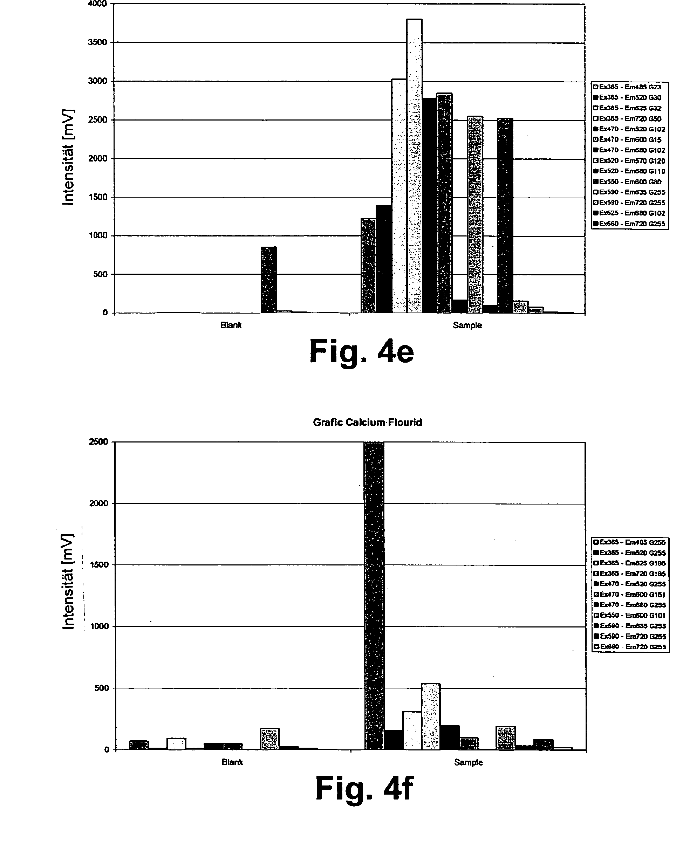

Die Figuren 4a bis 4f zeigen die gemessenen Fluoreszenzintensitäten für die untersuchten Materialien bei unterschiedlichen Wellenlängen in einer Zusammenschau in Form von Balkendiagrammen. Der in der Figurenlegende angeführte Parameter G steht für die Sensitivitätseinstellung des Fluoreszenzsensors. Generell gilt, dass je höher der Zahlenwert für G ist, desto höher die Sensitivität. G bezieht sich auf den Strom der LED zur Anregung. Je höher der Strom der LED ist, desto heller leuchtet sie und desto effizienter ist die Anregung. Wiederum fällt die ausgeprägte Fluoreszenzintensität über einen großen Wellenlängenbereich insbesondere bei Rubin auf.

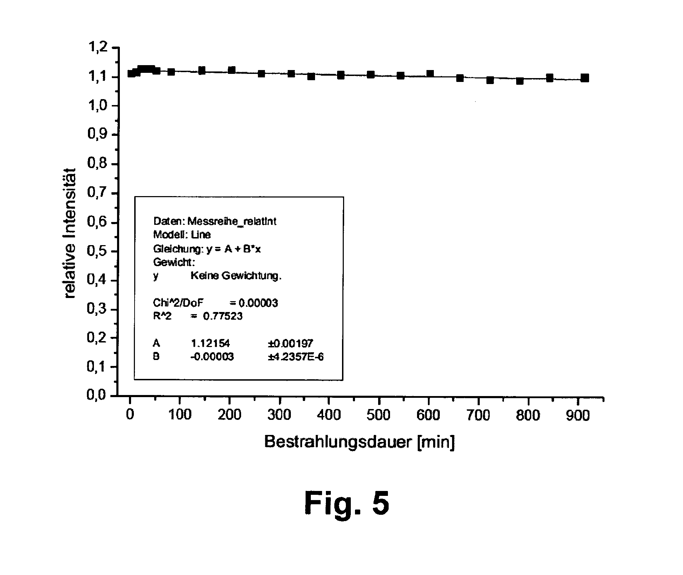

3. Die Figur 5 zeigt die Ergebnisse einer "Bleaching"-Untersuchung, die mit einem Laser mit einer Leistung von 18 MW bei einer Anregungswellenlänge von 532 nm durchgeführt worden ist. Dabei ist ein Rubin über unterschiedlich lange Zeiträume mit dem Laser bestrahlt bzw. angeregt worden, und die Fluoreszenzintensität ist gemessen worden. Der Plot zeigt eine praktisch horizontal verlaufende Ausgleichsgerade, d.h. die Fluoreszenzintensität des Rubins ist unabhängig von der Bestrahlungsdauer und nimmt insbesondere bei längeren Bestrahlungsdauern praktisch nicht ab. Mit anderen Worten: bei der Verwendung eines erfindungsgemäßen Rubins als Fluoreszenzstandard tritt kein Ausbleichen ("bleeching") des Fluoreszenzstandards auf. Nur zum Vergleich sei hier angemerkt, dass herkömmliche organische Fluoreszenzstandards oder Farbstoffe bei einer Anregungswellenlänge von 532 nm bereits mit der Stärke des Sonnenlichts in wenigen Minuten substantiell ausbleichen, was um mehrere Größenordnungen weniger intensiv ist, als das in dieser Untersuchung verwendete Anregungslicht, das von einem Laser mit einer Leistung von 18 MW erzeugt worden ist.

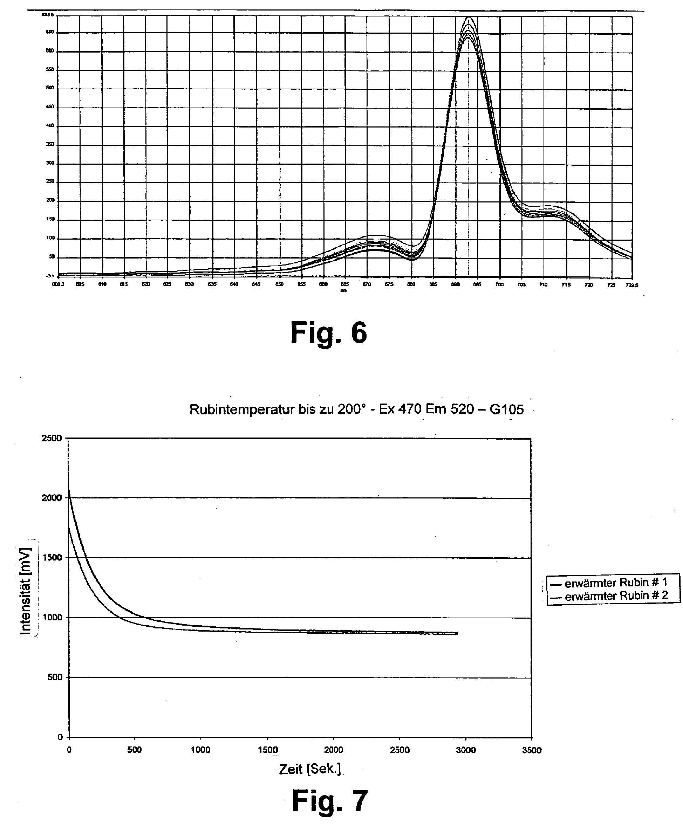

4. Die Figur 6 zeigt einen Plot der gemessenen Fluoreszenzintensitäten als Funktion der Wellenlänge für einen Rubin bei unterschiedlichen Temperaturen. Der Rubin ist mit Licht mit einer Wellenlänge von 400 nm angeregt worden. Die unterschiedlichen Graphen zeigen die Messungen bei Temperaturen zwischen Raumtemperatur und ca. 65 Grad Celsius, wobei die maximale Fluoreszenzintensität bei einer Emissionswellenlänge von ca. 693 nm bei einer Temperatur von ca. 65 Grad Celsius gemessen worden ist.

5. Die Figur 7 zeigt, die Fluoreszenzabhängigkeit eines Rubins von der Temperatur in einer anderen Form. Bei diesem Versuch wurde ein Rubin mit einem Heißluftföhn auf ca. 200 bzw. 250 Grad Celsius aufgeheizt. Nachdem die Wärmezufuhr durch den Heißluftföhn bei der Zeit t=0 gestoppt worden ist, hat sich der Rubin wieder auf Raumtemperatur abgekühlt. Während dieser Abkühlungsphase, d.h. mit abnehmender Temperatur, des Rubins ist die Fluoreszenzintensität bei gleich bleibender Wellenlänge (470 nm) und Intensität des Anregungslichts als Funktion der Zeit und damit der Temperatur bestimmt worden. Die Messung erfolgte bei einer Wellenlänge von 520 nm.

Der Fachmann wird ohne Weiteres erkennen, dass die hier beschriebenen erfindungsgemäßen fluoreszierenden Minerale bzw. Substanzen, die derartige fluoreszierenden Minerale enthalten, vorteilhaft auf andere als die vorstehend beschriebenen Arten und Weisen verwenden lassen, die ebenfalls vom Schutzumfang der Erfindung umfasst sein sollen, wie dieser durch die nachstehenden Patentansprüche definiert ist. Insbesondere wird der Fachmann erkennen, dass der hier verwendete Begriff Fluoreszenzstandard weit auszulegen ist und alle Anwendungen umfasst, bei denen die Fluoreszenzeigenschaft der erfindungsgemäßen Minerale verwendet wird, d.h. nach geeigneter Anregung elektromagnetische Strahlung mit messbaren physikalischen Eigenschaften (wie beispielsweise Intensität, Polarisation, Lebensdauer, Phasenverschiebung, Rotationskorrelationszeit) bei einer wohl definierten Wellenlänge zu emittieren.

In einem bestimmten Aspekt betrifft die vorliegende Erfindung die Verwendung eines fluoreszierenden Minerals oder einer Substanz, die ein fluoreszierendes Mineral umfasst, als optischer Standard bzw. Fluoreszenzstandard, wobei es sich bei dem Mineral um ein natürlich vorkommendes Mineral handelt oder das Mineral synthetisch hergestellt worden ist.

Vorzugsweise handelt es sich bei dem fluoreszierenden Mineral um Korund, insbesondere Rubin oder Saphir, Fluorit, Chlorophan, Türkis, Zirkon, Zoisit, lolith bzw. Cordierit, Spinell, Topas, Calciumfluorit, Sphalerit bzw. Zinkblende, Wurtzit, Calcit bzw. Kalkspat, Apatit, Scheelit bzw. Tungstein, Powellit, Willemit, Feldspat, Sodalith, ein Uran-Mineral, Apatit bzw. Fluorapatit bzw. Chlorapatit bzw. Hydroxylapatit, Halit, Tanzanit, Aquamarin, Turmalin, Tremolit, Genthelvit, Gonnardit, Helvit, Meionit, Leucophanit, Tugtupit, Villiaumit, Barylit, Beryllit, Albit, Analcim, Wohlerit, Bustamit, Celestin, Chondrodit, Chrysolit bzw. Clinochrysolit, Chrysoberryll, Hemimorphit, Hexahydril, Strontianit, Ammolith, Andesin, Ankerit, Aragonit, Birmit, Chalcedon, Cerussit, Charoit, Diamant, Diopsid, Diaspor, Ekanit, Eudialyt, Friedelit, Greenockit, Grossular, Kunzit, Lapislazuli, Lepidolith, Minium, Norbergit, Oligoklas, Opal, Painit, Phosgenit, Phosphophyllit, Rhodizit, Rhodochrosit, Magmesit, Schwefel, Shortit, Siderit, Spurrit, Spodumen, Stolzit, Vanadinit, Wolframit, Wulfenit, YAG, Zinkit, Zinnober, Zunyit, Smithsonit, Anglesit, Microcline, Orthoclas, Danburit, Laurionit, Paralaureonit, Vlasovit, Thorit, Benitoit, Phenakit, Eukryptit, Dolomit, Svabit, Pectolit, Tirodit, Manganaxinit, Esperit, Röblingit, Harstigit, Otavit, Johnbaumit, Kyanit, Uvarovit, Sanidin, Scapolit, Moissanit (SiC), Cubic Zirkonia, Bernstein, Koralle, Perle, Perlmutt, Elfenbein oder um ein Al³⁺ enthaltendes Mineral bzw. oxidische und hydroxidische Minerale. Das fluoreszierende Mineral kann einen Aktivator oder Kombinationen von Aktivatoren enthalten, der bzw. die aus der folgenden Gruppe ausgewählt sind: zweiwertiges Mangan, Blei, Antimon, Cerium, insbesondere dreiwertiges Cerium, dreiwertiges Chrom, zweiwertiges oder dreiwertiges Eisen, dreiwertiges oder vierwertiges Titan, Kupfer, Silber, zweiwertiges Samarium, zweiwertiges oder dreiwertiges Europium, dreiwertiges Terbium, dreiwertiges Dysprosium, dreiwertiges Holmium, dreiwertiges Erbium, Uranyl-Verbindungen, Ruthenium-Verbindungen, Zinn-Verbindungen, Thallium- Verbindungen, Bismut-Verbindungen, Wolframat-Verbindungen, Molybdat- Verbindungen, Schwefel, Vanadium-Verbindungen, Lanthan-Verbindungen, Präseodym-Verbindungen, Neodym-Verbindungen, Promethium-Verbindungen, Gadolinium-Verbindungen, Thulium-Verbindungen, Ytterbium-Verbindungen, Lutetium-Verbindungen. Vorzugsweise ist der Aktivator bzw. sind die Aktivatoren in Dotierungen von 0.001% bis 20% (Gewichtsprozent) im Mineral enthalten. Das fluoreszierende Mineral oder die Substanz, die ein fluoreszierendes Mineral umfasst, kann in Form von Zylindern, Prismen, Platten, Blättchen, Kügelchen bzw. Beads, Nanopartikeln oder Pulver vorliegen. Ferner kann das fluoreszierende Mineral oder die Substanz, die ein fluoreszierendes Mineral umfasst, in ein Polymer, Gel, Hydrogel, Glass oder eine Trägermatrix eingegossen bzw. einpolymerisiert sein.

Vorzugsweise umfasst die Verwendung als Fluoreszenzstandard die Messung der Intensität, Polarisation, Lebensdauer, Phasenverschiebung und/oder Rotationskorrelationszeit der Fluoreszenz. Insbesondere ist das fluoreszierende Mineral oder die Substanz, die ein fluoreszierendes Mineral umfasst, für eine gewünschte Anwendung als Fluoreszenzstandard funktionalisiert, indem funktionelle Gruppen mit der gewünschten Funktion chemisch auf der Oberfläche des fluoreszierenden Minerals angebracht sind. Das fluoreszierende Mineral oder die Substanz, die ein fluoreszierendes Mineral umfasst, kann für eine gewünschte Anwendung als Fluoreszenzstandard in ein Nanopartikel eingebettet sein. Das fluoreszierende Mineral oder die Substanz, die ein fluoreszierendes Mineral umfasst, kann als Fluoreszenzstandard verwendet werden, (i) um ein optisches Messgerät zu kalibrieren, und/oder (ii) um einen Geräte-Selbsttest eines optischen Messgeräts durchzuführen bzw. die Funktionalität eines Gerätes zu überprüfen, und/oder (iii) um eine chemische Reaktion, einen biochemischen oder diagnostischen Assay oder Test zu kalibrieren oder auszulesen, wobei es sich bei dem auszulesenden Assay oder Test vorzugsweise um ein Glucosemonitoring, Immunoassay, Proteinnachweis, Cell Assay, Cell Counting, Hormon-Test, Wasseranalyse, Lebensmittelanalyse, Oberflächenanalytik und Nukleinsäuretest bzw. Nukleinsäureamplifizierung handelt, und/oder (iv) indem dieses als Marker an ein Molekül angebracht wird, und/oder (v) um ein Produkt oder ein Objekt zu identifizieren, und/oder (vi) um die Temperatur, insbesondere des fluoreszierenden Minerals, zu bestimmen und ggf. zu regeln.

In einem weiteren Aspekt betrifft die vorliegende Erfindung eine Probenplatte zur Aufnahme wenigstens einer Probe, umfassend ein fluoreszierendes Mineral oder eine Substanz, die ein fluoreszierendes Mineral umfasst, zur Verwendung als Fluoreszenzstandard.

Vorzugsweise besteht die Probenplatte vollständig aus dem fluoreszierenden Mineral oder der Substanz, die ein fluoreszierendes Mineral umfasst. Das fluoreszierende Mineral oder die Substanz, die ein fluoreszierendes Mineral umfasst, kann in eine Trägermatrix eingebettet sein. Bei der Probenplatte kann es sich um eine Mikrotiterplatte mit einer Vielzahl von Vertiefungen handelt, wobei das fluoreszierende Mineral oder die Substanz, die ein fluoreszierendes Mineral umfasst, zur Verwendung als Fluoreszenzstandard vorzugsweise in wenigstens einer der Vertiefungen der Probenplatte angeordnet ist, und zwar herausnehmbar oder fest mit der Probenplatte verbunden. Bei der Probenplatte kann es sich auch um eine Lochplatte handelt, bei der sich mehrere Löcher vollständig durch die Lochplatte erstrecken und die Größe dieser Löcher so bemessen ist, dass eine in diese Löcher eingebrachte Probe aufgrund der Kapillarkräfte gegen die Schwerkraft in den Löchern gehalten wird. Vorzugsweise ist das fluoreszierende Mineral oder die Substanz, die ein fluoreszierendes Mineral umfasst, zur Verwendung als Fluoreszenzstandard in wenigstens einem der Löcher der Lochplatte angeordnet und weist eine Form auf, die im Wesentlichen der Form der Löcher der Lochplatte entspricht. Insbesondere kann es sich bei der Probenplatte auch um eine Kapillare, eine Küvette, ein Reaktionsgefäß, ein Gel, ein Polymer, ein Tube, oder um einen Microfluidic-Chip handeln.

In einem weiteren Aspekt betrifft die vorliegende Erfindung eine Verwendung eines fluoreszierenden Minerals oder einer Substanz, die ein fluoreszierendes Mineral umfasst, als Detektor für elektromagnetische Strahlung, insbesondere im UV, sichtbaren und infraroten Bereich sowie im Röntgenbereich.

## Patentansprüche

1. Verwendung eines fluoreszierenden Minerals oder einer Substanz, die ein fluoreszierendes Mineral umfasst, als optischer Standard bzw. Fluoreszenzstandard, wobei es sich bei dem Mineral um ein natürlich vorkommendes Mineral handelt oder das Mineral synthetisch hergestellt worden ist, wobei das fluoreszierende Mineral oder die Substanz, die ein fluoreszierendes Mineral umfasst, als Fluoreszenzstandard verwendet wird, um ein Produkt oder ein Objekt zu identifizieren.

2. Verwendung nach Anspruch 1, wobei Etiketten, Barcodes oder Verpackungen mit dem fluoreszierenden Mineral oder einer Substanz, die ein fluoreszierendes Mineral umfasst versehen werden.

3. Verwendung nach Anspruch 1, wobei verschiedene, stabile fluoreszierende Minerale als Fluoreszenzstandard verwenden werden und aufgrund der Farb- oder Intensitätskombinationen bei verschiedenen Wellenlängen auf das ursprüngliche Objekt rückgeschlossen wird.

4. Verwendung nach Anspruch 1, wobei es sich bei dem fluoreszierenden Mineral um Korund, insbesondere Rubin oder Saphir, Fluorit, Chlorophan, Türkis, Zirkon, Zoisit, lolith bzw. Cordierit, Spinell, Topas, Calciumfluorit, Sphalerit bzw. Zinkblende, Wurtzit, Calcit bzw. Kalkspat, Apatit, Scheelit bzw. Tungstein, Powellit, Willemit, Feldspat, Sodalith, ein Uran-Mineral, Apatit bzw. Fluorapatit bzw. Chlorapatit bzw. Hydroxylapatit, Halit, Tanzanit, Aquamarin, Turmalin, Tremolit, Genthelvit, Gonnardit, Helvit, Meionit, Leucophanit, Tugtupit, Villiaumit, Barylit, Beryllit, Albit, Analcim, Wohlerit, Bustamit, Celestin, Chondrodit, Chrysolit bzw. Clinochrysolit, Chrysoberryll, Hemimorphit, Hexahydril, Strontianit, Ammolith, Andesin, Ankerit, Aragonit, Birmit, Chalcedon, Cerussit, Charoit, Diamant, Diopsid, Diaspor, Ekanit, Eudialyt, Friedelit, Greenockit, Grossular, Kunzit, Lapislazuli, Lepidolith, Minium, Norbergit, Oligoklas, Opal, Painit, Phosgenit, Phosphophyllit, Rhodizit, Rhodochrosit, Magmesit, Schwefel, Shortit, Siderit, Spurrit, Spodumen, Stolzit, Vanadinit, Wolframit, Wulfenit, YAG, Zinkit, Zinnober, Zunyit, Smithsonit, Anglesit, Microcline, Orthoclas, Danburit, Laurionit, Paralaureonit, Vlasovit, Thorit, Benitoit, Phenakit, Eukryptit, Dolomit, Svabit, Pectolit, Tirodit, Manganaxinit, Esperit, Röblingit, Harstigit, Otavit, Johnbaumit, Kyanit, Uvarovit, Sanidin, Scapolit, Moissanit (SiC), Cubic Zirkonia, Bernstein, Koralle, Perle, Perlmutt, Elfenbein oder um ein Al³⁺ enthaltendes Mineral bzw. oxidische und hydroxidische Minerale handelt.

5. Verwendung nach Anspruch 1, wobei das fluoreszierende Mineral einen Aktivator oder Kombinationen von Aktivatoren enthält, der bzw. die aus der folgenden Gruppe ausgewählt sind: zweiwertiges Mangan, Blei, Antimon, Cerium, insbesondere dreiwertiges Cerium, dreiwertiges Chrom, zweiwertiges oder dreiwertiges Eisen, dreiwertiges oder vierwertiges Titan, Kupfer, Silber, zweiwertiges Samarium, zweiwertiges oder dreiwertiges Europium, dreiwertiges Terbium, dreiwertiges Dysprosium, dreiwertiges Holmium, dreiwertiges Erbium, Uranyl-Verbindungen, Ruthenium-Verbindungen, Zinn-Verbindungen, Thallium- Verbindungen, Bismut-Verbindungen, Wolframat-Verbindungen, Molybdat- Verbindungen, Schwefel, Vanadium-Verbindungen, Lanthan-Verbindungen, Präseodym-Verbindungen, Neodym-Verbindungen, Promethium-Verbindungen, Gadolinium-Verbindungen, Thulium-Verbindungen, Ytterbium-Verbindungen, Lutetium-Verbindungen.

6. Verwendung nach Anspruch 5, wobei der Aktivator bzw. die Aktivatoren in Dotierungen von 0.001% bis 20% (Gewichtsprozent) im Mineral enthalten ist bzw. sind.

7. Verwendung nach Anspruch 1, wobei das fluoreszierende Mineral oder die Substanz, die ein fluoreszierendes Mineral umfasst, in Form von Zylindern, Prismen, Platten, Blättchen, Kügelchen bzw. Beads, Nanopartikeln oder Pulver vorliegt.

8. Verwendung nach Anspruch 1, wobei das fluoreszierende Mineral oder die Substanz, die ein fluoreszierendes Mineral umfasst, in ein Polymer, Gel, Hydrogel, Glass oder eine Trägermatrix eingegossen bzw. einpolymerisiert ist.

9. Verwendung nach Anspruch 1, wobei die Verwendung als Fluoreszenzstandard die Messung der Intensität, Polarisation, Lebensdauer, Phasenverschiebung und/oder Rotationskorrelationszeit der Fluoreszenz umfasst.

10. Verwendung nach Anspruch 1, wobei das fluoreszierende Mineral oder die Substanz, die ein fluoreszierendes Mineral umfasst, für eine gewünschte Anwendung als Fluoreszenzstandard funktionalisiert ist, indem funktionelle Gruppen mit der gewünschten Funktion chemisch auf der Oberfläche des fluoreszierenden Minerals angebracht sind.

11. Verwendung nach Anspruch 1, wobei das fluoreszierende Mineral oder die Substanz, die ein fluoreszierendes Mineral umfasst, für eine gewünschte Anwendung als Fluoreszenzstandard in ein Nanopartikel eingebettet ist.

12. Verwendung nach Anspruch 1, wobei das fluoreszierende Mineral oder die Substanz, die ein fluoreszierendes Mineral umfasst, als Fluoreszenzstandard verwendet wird, indem dieses als Marker an ein Molekül angebracht wird.
